# EUROPEAN PATENT SPECIFICATION

(11) **EP 0 427 029 B1**
(45) Date of publication and mention of the grant of the patent: **25.01.1995**
(21) Application number: 90120111.1
(22) Date of filing: 19.10.1990
(51) Int. Cl.: B62D 6/00, B62D 5/06

(54) **Power steering for motor vehicles**
Servolenkung für Kraftfahrzeuge
Direction assistée pour véhicules automobiles

(30) Priority: 10.11.1989 IT 6798989
(43) Date of publication of application: 15.05.1991
(73) Proprietor: FIAT AUTO S.p.A., 10135 Torino (IT)
(72) Inventor: Torrielli, Vittorino, I-10100 Torino (IT)
(74) Representative: Jorio, Paolo

(56) References cited:
- DE-A- 3 333 597
- FR-A- 2 211 907
- FR-A- 2 439 698
- FR-A- 2 502 570
- GB-A- 2 215 684
- PATENT ABSTRACTS OF JAPAN vol. 13, no. 446 (M-877)(3794) 06 October 1989,& JP-A-1172064 (KAYABA IND CO LTD) 06 July 1989,
- PATENT ABSTRACTS OF JAPAN vol. 13, no. 446 (M-877)(3794) 06 October 1989,& JP-A-1172062 (KAYABA IND CO LTD) 06 July 1989,

## Description

This invention relates to a power steering equipment for motor vehicles, such as defined in the preamble of claim 1 and known for example from FR-A-2211907.

Various types of equipment are known for power assisted steering, power steering. In a known type the power steering is actuated by a mechanically controlled hydraulic device. This equipment is generally found to be unsatisfactory because the operating conditions are controlled solely by the action exerted on the steering wheel.

In another known type the power steering is actuated by an electronic motor controlled by an electronic unit. This equipment has a delicate, unreliable operation, particularly in the case of a battery whose charge is almost exhausted. This system is also relatively expensive since the equipment is solely dedicated to this function.

The object of the invention is to provide a power steering system which offers the maximum simplicity of operation and operational reliability, and whose actuation can be integrated with that of other equipment in the motor vehicle as shown in FR-A-2211907 which however relates to a system having an hydraulic circuit rather complex.

The object is achieved by a power steering of the invention according to Claim 1.

For a better understanding of the invention two preferred embodiments will be described here, by way of example, with reference to the attached drawings, in which:
Fig. 1 is a diagram of power steering equipment according to a first embodiment of the invention;
Fig. 2 is a diagram of power steering equipment according to a second embodiment of the invention;
Figures 3 and 4 are diagrams of electric valves for the equipment.

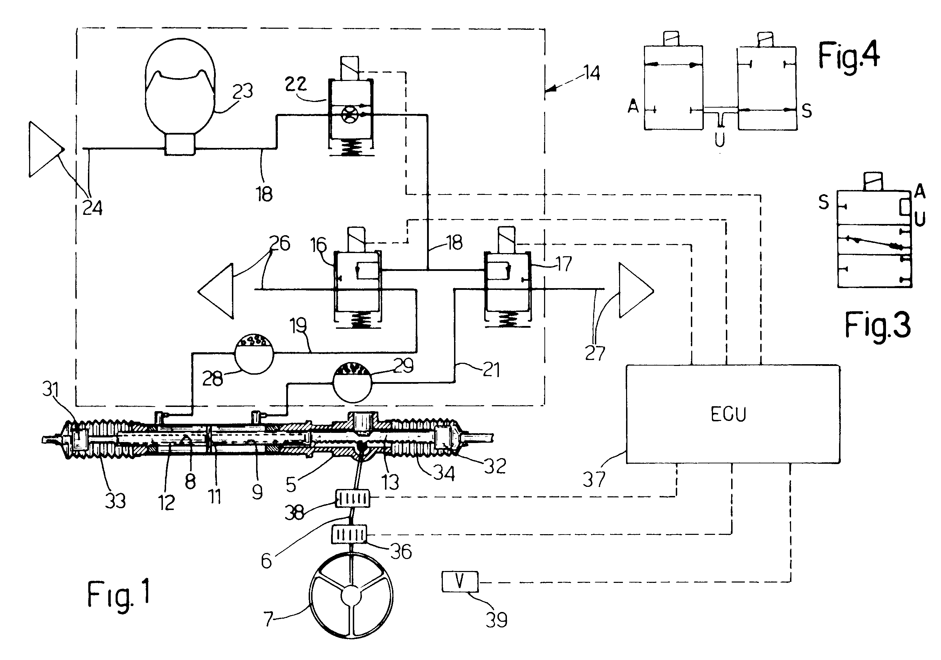

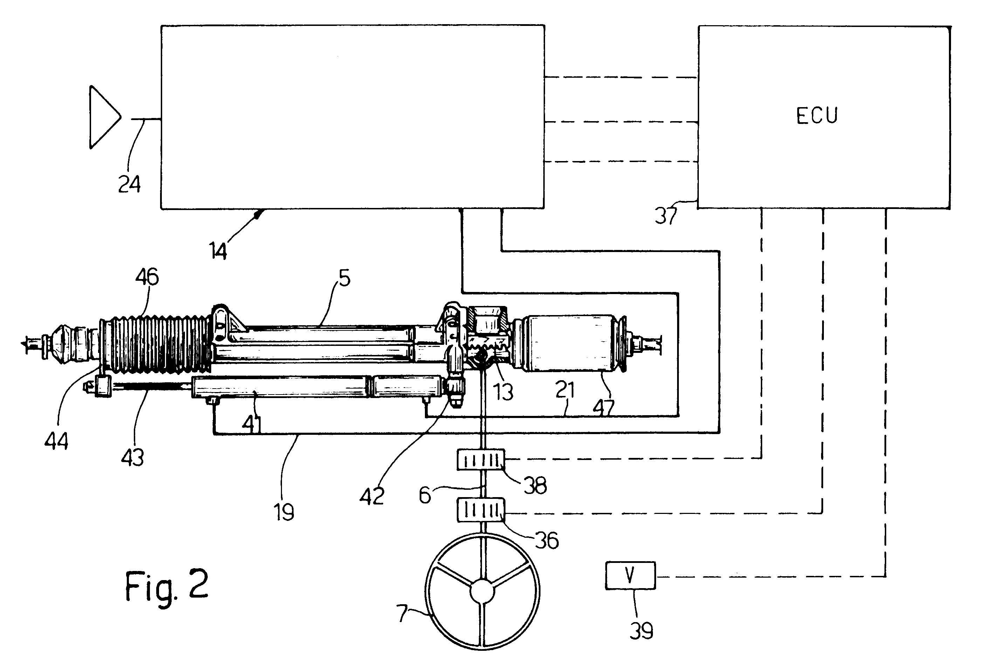

With reference to Fig. 1, the normal steering box, which is secured to the chassis of the motor vehicle, and supports the steering control and actuating mechanisms, is denoted generically by 5. In particular, the normal steering column 6, which is connected to the steering wheel 7 of the motor vehicle, is mounted rotatably on box 5. Box 5 also accommodates a hydraulic actuating device which comprises a pair or opposing hydraulic chambers or cylinders 8 and 9, with which a common piston 11 interacts, which piston is therefore double acting. Piston 11 is secured to a rod 12, which slides into box 5 and is in turn secured to a rack 13 integrated with a gear supported by column 6.

Hydraulic device 8, 9 is controlled via a hydraulic circuit under pressure, generically denoted by 14, which comprises a pair of electric valves 16 and 17. The latter are connected on the one hand by a common inlet duct 18, and on the other by two corresponding outlet ducts 19 and 21. Electric valves 16 and 17 may be of the three-way type, and may have two positions, as shown in Fig. 1, or may be of the three-way type with three positions, as shown in diagrammatic form in Fig. 3. Alternatively they may also use two pairs of two-way, two-position electric valves combined, one pair of which is shown diagrammatically in Fig. 4.

On duct 18 may be mounted an electric throttle valve 22, which normally throttles duct 18, and allows the passage of a predetermined flow of fluid. This valve may be actuated to eliminate the throttling and increase the flow rate. Common duct 18 is connected to an accumulator 23, for fluid under pressure, which should preferably consist of suitable oil which, via an inlet duct 24, derives from a tank not shown in the figure. The oil in accumulator 23 is kept under pressure by a known method by a suitable electric pump.

Both the tank and accumulator 23 may be integrated with the hydraulic circuits of other equipment existing on board the motor vehicle. If this equipment is not generally used simultaneously with the power steering, e.g. the antiskid assembly, both accumulator 23 and the electric pump and oil tank may be of moderate dimensions.

The two electric valves 16 and 17 are normally arranged so that they by-pass the oil deriving from cylinder 8 and 9 to a corresponding outlet duct 26 and 27 connected to the tank. Each electric valve 16 and 17 is capable of being actuated to seal the outlet ducts and feed the oil to the corresponding cylinder 8 and 9 via the relative outlet duct 19 and 21. Electric valves 16 and 17 may be of the on/off type, which reduces their cost. In this case a corresponding chamber or cell 28 and 29, containing deformable material, e.g. gas, is arranged in each of the two ducts 19 and 21, for the purpose of retarding the motion of piston 11. The gas is expanded when the relative electric valve 16 and 17 is actuated. The gas from cell 28 and 29 therefore allows the initiation and gradual arrest of the motion of piston 11. Alternatively to chambers 28 and 29, it is possible to use, in each of ducts 19 and 21, tubes which can be deformed by the action of the pressure. The solution with three-position valves enables the residual pressure in ducts 19, 21, with deformable tubes, or in cells 28, 29, to be used to obtain power assistance without any oil consumption when valves 16 and 17 are in the fully off position.

The power steering also comprises means which are sensitive to the control of the steering wheel and to the speed of the vehicle. These sensitive means comprise a sensor 36, capable of recording both the torque applied to column 6, and the relative direction, and of transmitting the relevant information, in the form of electrical signals, to a logic unit denoted generically by 37. The sensitive means also comprise a sensor 38 for the present angular position of column 6, and of transmitting the relevant information to unit 37.

Finally, the sensitive means comprise a tachometric sensor 39 capable of recording the speed of the motor vehicle, and of transmitting corresponding coded signals. These signals comprise a first threshold signal, which is generated when a speed lower than a first predetermined speed is recorded, below which it is necessary to actuate throttle valve 22. A second signal is generated by sensor 39 when a speed higher than a second predetermined speed is recorded, for which it is not necessary to actuate the power steering. Moreover, the signals generated by sensor 39 are transmitted to logic unit 37, which consists of an electronic microprocessor unit (EU) capable of processing the information received from sensors 36, 38 and 39, in order to control an electric power circuit, not shown in Fig. 1, for selectively controlling electric valves 16, 17 and 22.

Unit 37 may be provided for controlling and operating not only the power steering but also other servomechanisms and signalling devices in the motor vehicle. Therefore unit 37 is capable of diagnosing the different conditions of the motor vehicle, including any malfunction in hydraulic circuit 14 and double acting piston 11.

The operation of the power steering is as follows.

When the driver, by means of steering wheel 7, applies a torque to column 6, the torque signal transmitted by sensor 36 conditions unit 37 to actuate one or other of the two electric valves 16 and 17. The oil under pressure, and running through the corresponding duct 19,21 and cell 28 and 29, then causes piston 11 to move in the corresponding direction. The position of column 6 is constantly recorded by sensor 38, whose signal can be used as a control feedback.

When the driver reduces the torque on steering wheel 7 below a certain value, the signal from sensor 36 conditions unit 37 to de-activate valves 16 and 17, as a result of which the action of the oil on the steering ceases. It is therefore evident that the rotation of column 6, and hence the actuation of the steering, is assisted by the action of the fluid under pressure, which substantially reduces the effort exerted by the driver.

If steering wheel 7 is actuated with the vehicle travelling at low speed, or even stationary, sensor 39 records a speed lower than the threshold speed. The relative signal conditions unit 37 to open electric throttle valve 22, thereby increasing the flow of oil in duct 18, and hence in electric valve 16, 17 actuated. The additional effort required by the steering at low speed is therefore exceeded.

On the other hand, when the motor vehicle is travelling at medium-high speed, exceeding the second predetermined speed, the relative signal generated by sensor 39 conditions unit 37 to inhibit the actuation of electric valves 16 and 17. In fact in this condition the effort required by the steering for its actuation is greatly reduced, and it is appropriate for the driver to have the full physical sensation of the operations carried out. Under this condition, however, it is necessary for the braking to be assisted, the actuation of the braking system not necessarily being concomitant with that of the steering system.

Finally, if unit 37 diagnoses any malfunction in the power steering, it automatically disables the actuation of electric valves 16, 17 and 22, thereby eliminating any risk to the motor vehicle or equipment.

The embodiment shown in Fig. 2 is similar to that shown in Fig. 1, its corresponding parts being denoted by the same reference numbers. Their description is not repeated here, therefore. The hydraulic device for actuating the steering consists here of a double hydraulic cylinder 41, outside steering box 5, and secured to it by means of a cross member 42. Double cylinder 41 is connected to the two outlet ducts 19 and 21 of hydraulic circuit 14, for actuating a double acting piston supported by a rod 43. The latter is connected by means of a flange 44 to a bar inside steering box 5, and hence to rack 13. Between bar 13 and flange 44 are inserted deformable elements which perform the function of cells 28 and 29 in Fig. 1, or of the deformable tubes of ducts 19 and 21.

The above indicates numerous evident advantages of the power steering according to the invention over the known equipment. In fact it enables use to be made of the fluid under pressure which may be provided for other servomechanisms in the vehicle and it can be integrated with the hydraulic system and/or with the electronic control system. It may also be used with other devices and servomechanisms in the motor vehicle. Moreover, the cost of manufacturing it is moderate thanks to the small number of components and the use of electronic on/off valves. If it is not used simultaneously with such other servomechanisms, it also allows moderate dimensions of the components of the hydraulic circuit. Finally, thanks to the inhibition of the operation of the power steering at medium and high speeds of the motor vehicle, it also provides for a certain reduction in energy consumption. It is evident that various modifications and improvements can be made to the power steering system described without departing from the spirit or scope of the invention. For example, electric valves 16 and 17 (Fig. 1), instead of being of the on/off type, may be of the proportional type, to provide more gradual servo (power) assistance to the steering. In this case sensor 36 must be capable of generating coded signals whose numerical value is proportional to the value of the torque recorded on the column. Moreover, cells 28 and 29 may be omitted since the "graduality" of the actuation is now guaranteed by the same proportional electric valves.

## Claims

1. Power steering for motor vehicles, comprising a mechanism (5,6) connected to the steering wheel (7) for mechanically controlling the steering and an hydraulic apparatus (8,9;41;23,37) for actuating the steering in addition to said mechanism (5,6) in order to aid the rotation of the steering wheel (7), wherein said hydraulic apparatus comprises an hydraulic device (8,9;41) comprising a pair of opposing hydraulic chambers (8,9) and a common actuator (11) connected to said mechanism (6); an hydraulic accumulator (23) for an actuating fluid under pressure; a logic unit (37) for controlling the selective supply of said fluid from said accumulator (23) to said device (8,9;41); a pair of electric valves (16,17) connected to said accumulator (23) by means of a common duct (18), each of said valves (16,17) being connected to one of said chambers (8,9) and being controlled by said logic unit (37) for selectively performing the function of selectively connecting the respective chamber (8,9) to said accumulator (23) and to an outlet for a fluid tank, and means (36,38,39) sensitive to the control of said steering wheel (7) and to the speed of the motor vehicle for conditioning said logic unit (37) for said control; **characterized** in that the hydraulic apparatus further comprises an electric throttle valve (22) arranged along said common duct (18) and between said accumulator (23) and said valves (16,17) for throttling the common duct (18) when deactivated; said electric valves (16,17) being of the type connecting said chambers (8,9) to said outlet for the tank when they are not activated, and said logic unit (37) being designed to activate said throttle valve (22), thereby increasing the flow of fluid in duct (18), when the vehicle speed is below a first threshold value and to de-activate both said throttle valve and said electric valves (16,17) when the vehicle speed is above a second threshold value, higher than said first threshold value.

2. Power steering according to claim 1, wherein each of said electric valves (16,17) is of the "On/Off" type, and is connected to the corresponding chamber (8, 9) by means of a corresponding outlet duct (19, 21), in which is inserted a corresponding cell (28, 29) containing deformable material for retarding the action of the said fluid on the said actuator (11).

3. Power steering according to claim 1, characterised in that each of the said electric valves (16, 17) is of the "On/Off" type, and is connected to the corresponding chamber (8, 9) by means of a corresponding outlet duct (19, 21), comprising a tube which is deformable under the action of the pressure, in order to increase its volume, to retard the action of the said fluid on the said actuator (11).

4. Power steering according to claim 2 or 3, characterised in that the said two chambers (8, 9) are cylindrical or coaxial, the said common actuator consisting of a piston (11) connected to the said mechanism (6) by means of an element (13) coaxial with it.

5. Power steering according to Claim 2 or 3, characterised in that the said two chambers are cylindrical and coaxial, and are supported by a separate structure (41), comprising a bar (43) capable of acting, via a deformable component, on an element (13) connected to the said mechanism (6).

6. Power steering according to one of the preceding claims, in which the said mechanism consists of a column (6) connected to the steering wheel (7), characterised in that the said sensitive means comprise a torque sensor (36) capable of recording both the direction and the torque applied by the steering wheel on the said column.

7. Power steering according to claim 6, characterised in that the said sensitive means comprise a second sensor (38) capable of recording the angle at which the said column (6) is rotated in order to supply to the said logic unit (37) a control signal from the said electric valves.

8. Power steering according to claims 1 and 7, characterised in that the said two actuating valves (16, 17) are of the proportional type.

9. Power steering according to one of claims 6 to 8, characterised in that the said sensitive means also comprise a tachometric sensor (39) capable of recording the speed of the vehicle, and of transmitting coded signals corresponding to predetermined values of the said speed.

10. Power steering according to one of the preceding claims, characterised in that the said logic unit comprises an electronic microprocessor unit (37) capable of processing the information received from the said sensitive means (36, 38, 39).

11. Power steering according to one of the preceding claims, characterised in that the said logic unit (37) and/or the said hydraulic accumulator (23) are integrated respectively with a logic unit and with a hydraulic circuit existing in the motor vehicle for equipment which can be used substantially independently of the actuation of the power steering.

## Patentansprüche

1. Servolenkung für Kraftfahrzeuge, aufweisend einen mit dem Lenkrad (7) verbundenen Mechanismus (5, 6) zur mechanischen Betätigung der Lenkung und eine hydraulische Vorrichtung (8, 9; 41; 23, 37) zur Betätigung der Lenkung zusätzlich zu dem Mechanismus (5, 6), um die Drehung des Lenkrades (7) zu unterstützen, wobei die hydraulische Vorrichtung eine hydraulische Einrichtung (8, 9; 41) aufweist, welche zwei gegenüberliegende hydraulische Kammern (8, 9) und ein mit dem Mechanismus (6) verbundenes gemeinsames Stellorgan (11) aufweist; einen hydraulischen Druckspeicher (23) für eine unter Druck befindliche Antriebsflüssigkeit; einen Logikbaustein (37) zur Regelung der selektiven Förderung der Flüssigkeit von dem Druckspeicher (23) zu der Einrichtung (8, 9; 41); zwei mittels einer gemeinsamen Rohrleitung (18) mit dem Druckspeicher (23) verbundene elektrische Ventile (16, 17), wobei jedes der Ventile (16, 17) an eine Kammer (8, 9) angeschlossen ist und durch den Logikbaustein (37) gesteuert wird, um selektiv die Funktion zu verrichten, die jeweilige Kammer (8, 9) selektiv mit dem Druckspeicher (23) und einem Ablauf zu einem Flüssigkeitstank zu verbinden; und Mittel (36, 38, 39), die empfindlich für die Betätigung des Lenkrades (7) und die Geschwindigkeit des Kraftfahrzeuges sind, um den Logikbaustein (37) für die Steuerung zu konditionieren;
dadurch gekennzeichnet, daß
die hydraulische Vorrichtung weiterhin ein in der gemeinsamen Rohrleitung (18) und zwischen dem Druckspeicher (23) und den Ventilen (16, 17) angeordnetes elektrisches Drosselventil (22) aufweist, um die gemeinsames Rohrleitung (18) zu drosseln, wenn es außer Betrieb gesetzt ist; die elektrischen Ventile (16, 17) von der Art sind, daß sie die Kammern (8, 9) mit dem Ablauf zu dem Tank verbinden, wenn sie nicht in Betrieb sind, und der Logikbaustein (37) ausgelegt ist, das Drosselventil (22) in Betrieb zu setzen und dadurch den Fluß von Flüssigkeit in der Rohrleitung (18) zu erhöhen, wenn die Fahrzeuggeschwindigkeit unter einem ersten Schwellenwert ist, und sowohl das Drosselventil als auch die elektrischen Ventile (16, 17) außer Betrieb zu setzen, wenn die Fahrzeuggeschwindigkeit über einem zweiten Schwellenwert ist, der höher ist als der erste Schwellenwert.

2. Servolenkung nach Anspruch 1, worin jedes der elektrischen Ventile (16, 17) ein Zweipunktventil ist und mit der entsprechenden Kammer (8, 9) mittels einer entsprechenden Ablaufleitung (19, 21) verbunden ist, in welche eine entsprechende Zelle (28, 29) eingefügt ist, die ein verformbares Material zur Verzögerung der Wirkung Flüssigkeit auf das Stellorgan (11) enthält.

3. Servolenkung nach Anspruch 1, dadurch gekennzeichnet, daß jedes der elektrischen Ventile (16, 17) ein Zweipunktventil ist und mit der entsprechenden Kammer (8, 9) mittels einer entsprechenden Ablaufleitung (19, 21) verbunden ist, welche einen unter der Wirkung des Druckes verformbaren Schlauch aufweist, um dessen Volumen zu vergrößern und damit die Wirkung der Flüssigkeit auf das Stellorgan (11) zu verzögern.

4. Servolenkung nach einem der Ansprüche 2 oder 3, dadurch gekennzeichnet, daß die beiden Kammern (8, 9) zylinderförmig oder koaxial sind, und das gemeinsame Stellorgan aus einem Kolben (11) besteht, der mit dem Mechanismus (6) mittels eines dazu koaxialen Elementes (13) verbunden ist.

5. Servolenkung nach einem der Ansprüche 2 oder 3, dadurch gekennzeichnet, daß die beiden Kammern zylinderförmig und koaxial sind und durch eine separate Anordnung (41) unterstützt werden, welche eine Stange (43) aufweist, die mittels eines verformbaren Bauteils auf ein mit dem Mechanismus (6) verbundenes Element (13) wirken kann.

6. Servolenkung nach einem der vorangehenden Ansprüche, in der der Mechanismus aus einer mit dem Lenkrad (7) verbundenen Säule (6) besteht, dadurch gekennzeichnet, daß die empfindlichen Mittel einen Drehmomentsensor (36) aufweisen, der sowohl die Richtung als auch das durch das Lenkrad auf die Säule aufgebrachte Drehmoment aufnehmen kann.

7. Servolenkung nach Anspruch 6, dadurch gekennzeichnet, daß die empfindlichen Mittel einen zweiten Sensor (38) aufweisen, der den Winkeln aufnehmen kann, mit dem die Säule (6) gedreht worden ist, um dem Logikbaustein (37) ein Steuersignal von den elektrischen Ventilen zu liefern.

8. Servolenkung nach einem der Ansprüche 1 bis 7, dadurch gekennzeichnet, daß die zwei Stellventile (16, 17) Proportionalventile sind.

9. Servolenkung nach einem der Ansprüche 6 bis 8, dadurch gekennzeichnet, daß die empfindlichen Mittel außerdem einen Drehzahlsensor (39) aufweisen, der die Geschwindigkeit des Fahrzeuges aufnehmen und verschlüsselte Signale übertragen kann, die vorbestimmten Werten der Geschwindigkeit entsprechen.

10. Servolenkung nach einem der vorangehenden Ansprüche, dadurch gekennzeichnet, daß der Logikbaustein eine elektronische Mikroprozessoreinheit (37) aufweist, die die von den empfindlichen Mitteln (36, 38, 39) erhaltenen Informationen verarbeiten kann.

11. Servolenkung nach einem der vorhergehenden Ansprüche, dadurch gekennzeichnet, daß der Logikbaustein (37) und/oder der hydraulische Druckspeicher (23) mit einem Logikbaustein bzw. einem Hydraulikkreislauf zusammengefaßt sind, die in dem Kraftfahrzeug für eine Einrichtung vorhanden ist, die im wesentlichen unabhängig von der Betätigung der Servolenkung verwendet werden kann.

## Revendications

1. Direction assistée pour véhicules automobiles, comprenant un mécanisme (5,6) connecté au volant (7) pour commander mécaniquement la direction et un appareil hydraulique (8,9;41,23,37) pour actionner la direction en plus dudit mécanisme (5,6) afin de faciliter la rotation du volant (7), dans laquelle ledit appareil hydraulique comprend un dispositif hydraulique (8,9;41) comportant deux chambres hydrauliques opposées (8,9) et un actionneur commun (11) relié audit mécanisme (6) ; un accumulateur hydraulique (23) pour un fluide de manoeuvre sous pression ; une unité logique (37) pour commander l'admission sélective dudit fluide dudit accumulateur (23) audit dispositif (8,9;41) ; deux électrovannes (16, 17) raccordées audit accumulateur (23) par un conduit commun (18), chacune desdites vannes (16,17) étant raccordée à une desdites chambres (8,9) et étant commandée par la dite unité logique (37) pour exécuter sélectivement la fonction de connexion sélective de la chambre respective (8,9) audit accumulateur (23) et à une sortie vers un réservoir de fluide ; et des moyens (36,38,39) sensibles à la manoeuvre dudit volant (7) et à la vitesse du véhicule, pour conditionner ladite unité logique (37) en vue de ladite commande ; caractérisée en ce que l'appareil hydraulique comprend en outre une électrovanne d'étranglement (22) placée dans ledit conduit commun (18) et entre ledit accumulateur (23) et lesdites vannes (16,17) pour étrangler le conduit commun (18) lorsqu'elle est désexcitée ; lesdites électrovannes (16,17) étant du type qui relie lesdites chambres (8,9) à ladite sortie vers le réservoir lorsqu'elles ne sont pas excitées, et ladite unité logique (37) étant conçue pour exciter ladite vanne d'étranglement (22), afin d'augmenter le débit de fluide dans le conduit (18), lorsque la vitesse du véhicule est inférieure à une première valeur de seuil et pour desexciter à la fois ladite vanne d'étranglement et les dites électrovannes (16,17) lorsque la vitesse du véhicule est supérieure à une deuxième valeur de seuil, plus élevée que ladite première valeur de seuil.

2. Direction assistée suivant la revendication 1, dans laquelle chacune desdites électrovannes (16,17) est du type "tout ou rien" et est connectée à la chambre correspondante (8,9) par un conduit de sortie correspondant (19,21) dans lequel est insérée une cellule correspondante (28,29) contenant une substance déformable pour retarder l'action dudit fluide sur ledit actionneur (11).

3. Direction assistée suivant la revendication 1, caractérisée en ce que chacune desdites électrovannes (16,17) est du type "tout ou rien" et est connectée à la chambre correspondante (8,9) par un conduit de sortie correspondant (19,21) comportant un tube qui est déformable sous l'action de la pression, afin d'augmenter son volume, pour retarder l'action dudit fluide sur ledit actionneur (11).

4. Direction assistée suivant la revendication 2 ou 3, caractérisée en ce que lesdites deux chambres (8,9) sont cylindriques ou coaxiales, ledit actionneur commun consistant en un piston (11) relié audit mécanisme (6) par un élément(13)coaxial audit piston.

5. Direction assistée suivant la revendication 2 ou 3, caractérisée en ce que lesdites deux chambres sont cylindriques et coaxiales et sont supportées par une structure séparée (41) comprenant une barre (43) qui peut agir, par l'intermédiaire d'un composant déformable, sur un élément (13) relié audit mécanisme (6).

6. Direction assistée suivant une des revendications précédentes, dans laquelle ledit mécanisme consiste en une colonne (6) connectée au volant (7), caractérisée en ce que lesdits moyens sensibles comprennent un capteur de couple (36) capable d'enregistrer à la fois le sens et la valeur du couple appliqué par le volant sur la dite colonne.

7. Direction assistée suivant la revendication 6, caractérisée en ce que lesdits moyens sensibles comprennent un deuxième capteur (38) capable d'enregistrer l'angle de rotation de ladite colonne (6), afin de fournir à ladite unité logique (37) un signal de commande desdites électrovannes.

8. Direction assistée suivant les revendications 1 et 7, caractérisée en ce que les deux électrovannes (16,17) sont du type proportionnel.

9. Direction assistée suivant une des revendications 6 à 8, caractérisée en ce que lesdits moyens sensibles comprennent également un capteur tachymétrique(39) capable d'enregistrer la vitesse du véhicule et de transmettre des signaux codés correspondant à des valeurs prédéterminées de ladite vitesse.

10. Direction assistée suivant une des revendications précédentes, caractérisée en ce que ladite unité logique comprend un microprocesseur électronique (37) capable de traiter les informations fournies par lesdits moyens sensibles (36,38,39).

11. Direction assistée suivant une des revendications précédentes, caractérisée en ce que ladite unité logique (37) et/ou ledit accumulateur hydraulique (23) sont intégrés respectivement dans une unité logique et dans un circuit hydraulique qui existent dans le véhicule pour un équipement qui peut être utilisé sensiblement indépendamment du fonctionnement de la direction assistée.
